# EUROPÄISCHE PATENTANMELDUNG

(11) **EP 3 888 968 A1**
(43) Veröffentlichungstag der Anmeldung: **06.10.2021**
(21) Anmeldenummer: 21165416.5
(22) Anmeldetag: 27.03.2021
(51) Int. Cl.: B60L 9/18, B60M 1/02, B60M 3/02, B60M 3/04

(54) **VERFAHREN ZUM STEUERN EINES STRASSENGEFÜHRTEN OBERLEITUNGSSYSTEMS UND STEUEREINHEIT**

(30) Priorität: 31.03.2020 DE 102020204156
(71) Anmelder: VOLKSWAGEN AG, 38440 Wolfsburg (DE)
(72) Erfinder: WALLENTIN, Per, 38440 Wolfsburg (DE); MÖLLE, Steffen, 39128 Magdeburg (DE)
(74) Vertreter: FDST Patentanwälte

(57) **Zusammenfassung**

Die Erfindung betrifft ein Verfahren zum Steuern eines straßengeführten Oberleitungssystems (10), wobei das Oberleitungssystem (10) mindestens ein Segment (11, 12) mit einer Energieeinspeisung (13) und eine Steuereinheit (15) für das mindestens eine Segment (11, 12) aufweist, wobei die Steuereinheit (15) mindestens eine Kommunikationsschnittstelle (16) aufweist, wobei mindestens ein straßengeführtes Kraftfahrzeug (1) mit Stromabnehmern (2) das Segment (11, 12) befährt und mittels mindestens einer Sensorik einen Zustand des Oberleitungssystems (10) detektiert, wobei der Zustand mittels einer fahrzeugseitigen Kommunikationsschnittstelle (27) an die Steuereinheit (15) direkt oder indirekt über eine Zentrale (20) übermittelt wird, wobei die Steuereinheit (15) in Abhängigkeit des übermittelten Zustandes die Energieeinspeisung (13) ansteuert, sowie eine Steuereinheit (15).

## Beschreibung

Die Erfindung betrifft ein Verfahren zum Steuern eines straßengeführten Oberleitungssystems sowie eine Steuereinheit.

Straßengeführte Oberleitungssysteme dienen zum elektrischen Versorgen von straßengeführten Kraftfahrzeugen wie beispielsweise Lastkraftwagen mit Stromabnehmern. Ein solches Oberleitungssystem umfasst mindestens ein Segment mit einer Energieeinspeisung. Die Energieeinspeisung ist beispielsweise ein AC/DC-Wandler, der eine Netzspannung in eine Gleichspannung für die Oberleitungen wandelt. Die Energieeinspeisung wird dabei von einer Steuereinheit angesteuert. Eine Steuereinheit kann dabei auch mehrere Segmente mit deren Energieeinspeisungen steuern.

Aus der KR 2015 012 79 45 A ist ein schienengebundenes Oberleitungssystem bekannt, wobei eine Steuereinheit Positionsdaten von Schienenfahrzeugen erhält und nur die Abschnitte mit elektrischer Energie versorgt, in denen aktuell ein Schienenfahrzeug sich aufhält. Somit kann Energie eingespart werden, da die Energieeinspeisungen auch im Leerlauf elektrische Verluste aufweisen. Durch das Abschalten von Abschnitten wird diese Energie eingespart.

Der Erfindung liegt das technische Problem zugrunde, ein Verfahren zum Steuern eines straßengeführten Oberleitungssystems zu verbessern sowie eine zugehörige Steuereinheit zu schaffen.

Die Lösung des technischen Problems ergibt sich durch ein Verfahren mit den Merkmalen des Anspruchs 1 sowie eine Steuereinheit mit den Merkmalen des Anspruchs 6. Weitere vorteilhafte Ausgestaltungen der Erfindung ergeben sich aus den Unteransprüchen.

Das Verfahren zum Steuern eines straßengeführten Oberleitungssystems, wobei das Oberleitungssystem mindestens ein Segment mit einer Energieeinspeisung und mindestens eine Steuereinheit für das mindestens eine Segment aufweist, wobei die Steuereinheit mindestens eine Kommunikationsschnittstelle aufweist, erfolgt zunächst dadurch, dass mindestens ein straßengeführtes Kraftfahrzeug mit Stromabnehmern das Segment befährt und mittels mindestens einer Sensorik einen Zustand des Oberleitungssystems detektiert, wobei der Zustand mittels einer fahrzeugseitigen Kommunikationsschnittstelle an die Steuereinheit direkt oder indirekt über eine Zentrale übermittelt wird, wobei die Steuereinheit in Abhängigkeit des übermittelten Zustandes die Energieeinspeisung ansteuert. Hierdurch kann die Steuereinheit das Gesamtverhalten verbessern.

In einer bevorzugten Ausführungsform wird mittels der Sensorik eine Spannung an den Oberleitungen erfasst. Mittels dieser Information kann dann die Steuereinheit beispielsweise bei Unterspannungen die Leistungsabgabe der Energieeinspeisung erhöhen. Erfasst hingegen die Sensorik keine Spannung, so liegt vermutlich ein Fehler vor, beispielsweise eine Leitungsunterbrechung. In diesem Fall kann dann die Steuereinheit die Energieeinspeisung abschalten. Dies gewährleistet Sicherheit und spart Energie.

In einer weiteren Ausführungsform werden mittels der Sensorik Bilddaten des Oberleitungssystems und/oder der Umgebung des Oberleitungssystems erfasst. So kann beispielsweise ein straßengeführtes Kraftfahrzeug erfassen, dass eine Fahrbahn unterhalb der Oberleitungen durch ein anderes stehendes Fahrzeug blockiert ist. Daraufhin kann dann die Steuereinheit die Energieeinspeisung beispielsweise abschalten, da keine Kraftfahrzeuge elektrische Energie von den Oberleitungen beziehen können. Aber auch andere Defekte wie beispielsweise Leitungsbrüche können durch die Bilddaten erfasst werden.

In einer weiteren Ausführungsform werden der Steuereinheit Daten übermittelt, aus denen die Steuereinheit eine aktuelle und zukünftige Nutzung des Segments durch Kraftfahrzeuge ermittelt und in Abhängigkeit der ermittelten aktuellen und zukünftigen Nutzung wird dann die Energieeinspeisung angesteuert. Vorzugsweise sind die Daten Positionsdaten der Kraftfahrzeuge mit Stromabnehmern. Somit kann die Leistungsentnahme an den Bedarf angepasst werden.

Vorzugsweise wird die Energieeinspeisung abgeschaltet, wenn die Steuereinheit ermittelt, dass aktuell kein Kraftfahrzeug das Segment benutzt und für einen vorgegebenen Zeitraum eine zukünftige Nutzung nicht zu erwarten ist. Somit kann erheblich Energie eingespart werden Da im allgemeinen es zu Einschaltverlusten kommt, sollte der Zeitraum nicht zu klein gewählt werden. Dieser beträgt beispielsweise einige Minuten.

Dabei kann weiter vorgesehen sein, dass die Steuereinheit ihre Daten an eine Zentrale übermittelt, sodass eine bessere Planung durchgeführt werden kann. So können beispielsweise Kraftfahrzeuge frühzeitig darüber informiert werden, dass ein Segment aktuell abgeschaltet ist (z.B. aufgrund eines Leitungsbruchs).

Die Steuereinheit zum Steuern eines straßengeführten Oberleitungssystems ist derart ausgebildet, mindestens eine Energieeinspeisung eines Segments eines Oberleitungssystems anzusteuern, wobei die Steuereinheit mit mindestens einer Kommunikationsschnittstelle ausgebildet ist, wobei die Steuereinheit weiter derart ausgebildet ist, Daten über einen Zustand des Oberleitungssystems zu empfangen und in Abhängigkeit des Zustandes die Steuerung der Energieeinspeisung vorzunehmen.

Hinsichtlich der weiteren Ausgestaltungen wird auf die vorangegangenen Ausführungen Bezug genommen.

Die Erfindung wird nachfolgend anhand eines bevorzugten Ausführungsbeispiels näher erläutert. Die Figuren zeigen:
- Fig. 1: ein Kraftfahrzeug mit Stromabnehmern,
- Fig. 2: ein schematisches Blockschaltbild eines Oberleitungssystems und
- Fig. 3: ein schematisches Blockschaltbild eines Teils eines Kraftfahrzeugs.

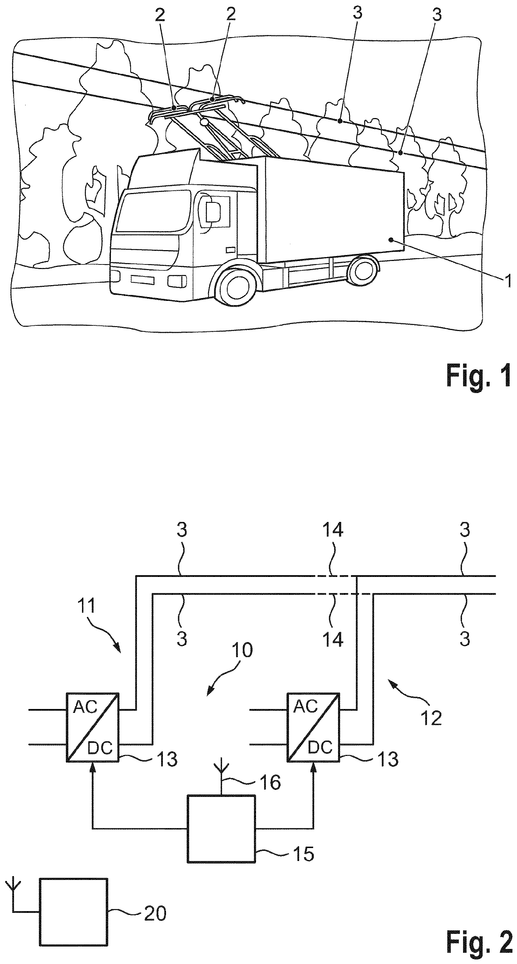

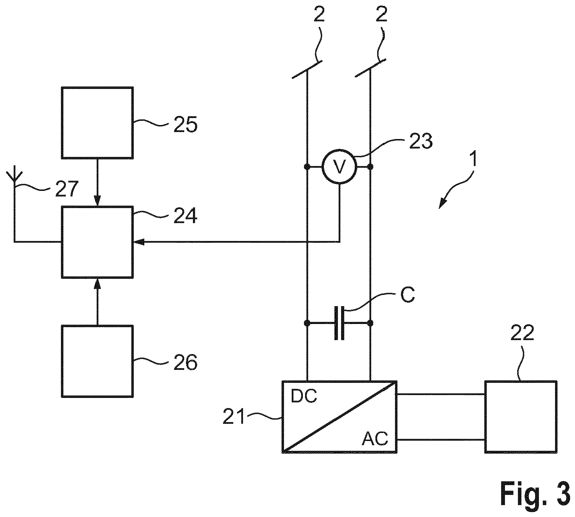

In der Fig. 1 ist ein Kraftfahrzeug 1 mit Stromabnehmern 2 dargestellt, wobei die Stromabnehmer 2 in Kontakt zu Oberleitungen 3 eines Oberleitungssystems 10 stehen (siehe Fig. 2). Das Oberleitungssystems 10 weist im dargestellten Beispiel zwei Segmente 11, 12 auf, denen jeweils eine eigene Energieeinspeisung 13 zugeordnet ist. Die Energieeinspeisung 13 ist beispielsweise als Gleichrichter ausgebildet, der eine Netzspannung in eine Hochvolt-Gleichspannung für die Oberleitungen 3 wandelt. Die Oberleitungen 3 der beiden Segmente 11, 12 sind entweder beabstandet oder durch Isolatoren 14 verbunden, um elektrische Rückwirkungen zu verhindern. Die beiden Energieeinspeisungen 13 werden durch eine Steuereinheit 15 angesteuert, die eine Kommunikationsschnittstelle 16 aufweist. Über die Kommunikationsschnittstelle 16 kann die Steuereinheit 15 entweder direkt mit Kraftfahrzeugen kommunizieren oder aber indirekt über eine Zentrale 20. In der Fig. 3 ist schließlich ein Teil eines Kraftfahrzeuges 1 als Blockschaltbild vereinfacht dargestellt. Das Kraftfahrzeug 1 weist Stromabnehmer 3 auf, die mit einem Wechselrichter 21 verbunden sind, der eine Elektromaschine 22 bestromt. Aus Übersichtsgründen sind dabei Trennelemente und Vorladeschaltungen nicht dargestellt. Am Eingang des Wechselrichters 21 ist ein Zwischenkreiskondensator C angeordnet. An den Stromabnehmern 3 ist eine Spannungsmesseinrichtung 23 angeordnet, die ihre Messdaten an ein Steuergerät 24 liefert. Das Steuergerät 24 ist datentechnisch mit einer Kamera 25 und einer Positionserfassungseinrichtung 26 verbunden. Schließlich weist das Steuergerät 24 eine Kommunikationsschnittstelle 27 auf, um mit der Steuereinheit 15 und/oder der Zentrale 20 zu kommunizieren.

Fährt nun beispielsweise ein Kraftfahrzeug 1 die Oberleitungen 3 des ersten Segments 11 ab, so wird die Spannung an den Oberleitungen 3 durch die Spannungsmesseinrichtung 23 erfasst. Diese Spannung kann dann regelmäßig oder situativ an die Steuereinheit 15 übertragen werden. Ist beispielsweise die gemessene Spannung unter einer Nennspannung, so spricht dies für eine starke Belastung des Segments 11 und die Steuereinheit 15 kann die Leistungsabgabe der Energieeinspeisung 13 erhöhen. Erfasst hingegen die Spannungsmesseinrichtung 23 keine Spannung, so spricht dies für einen Fehler. In diesem Fall kann dann die Steuereinheit 15 die Energieeinspeisung 13 abschalten. Durch die Daten der Positionserfassungseinrichtung 26 kann dabei auch der Fehlerort bestimmt werden. Zusätzlich übermittelt das Kraftfahrzeug 1 auch Bilddaten der Kamera 25, sodass beispielsweise weitere Fehler oder Blockierungen der Fahrbahnen unter den Oberleitungen 3 erfassbar sind, sodass dann beispielsweise die Steuereinheit 15 die Energieeinspeisung 13 abschaltet.

Weiter kann sich ein Kraftfahrzeug 1 über die Kommunikationsschnittstelle 27 bei der Steuereinheit 15 anmelden. Kennt die Steuereinheit 15 die Position aller Kraftfahrzeuge 1, so kann diese die Leistungsabgabe der Energieeinspeisungen 13 an die Anzahl der Kraftfahrzeuge 1 sowie deren Leistungsbedarf anpassen. Befindet sich hingegen kein Kraftfahrzeug 1 in einem Segment 11, 12 und fährt auch kein Kraftfahrzeug 1 kurzfristig in das Segment 11, 12 ein, so kann dessen Energieeispeisung 13 abgeschaltet werden, um Energie zu sparen.

### Bezugszeichenliste

- 1: Kraftfahrzeug
- 2: Stromabnehmer
- 3: Oberleitung
- 10: Oberleitungssystem
- 11, 12: Segment
- 13: Energieeinspeisung
- 14: Isolator
- 15: Steuereinheit
- 16: Kommunikationsschnittstelle
- 20: Zentrale
- 21: Wechselrichter
- 22: Elektromaschine
- 23: Spannungsmesseinrichtung
- 24: Steuergerät
- 25: Kamera
- 26: Positionserfassungseinrichtung
- 27: Kommunikationsschnittstelle

## Patentansprüche

1. Verfahren zum Steuern eines straßengeführten Oberleitungssystems (10), wobei das Oberleitungssystem (10) mindestens ein Segment (11, 12) mit einer Energieeinspeisung (13) und eine Steuereinheit (15) für das mindestens eine Segment (11, 12) aufweist, wobei die Steuereinheit (15) mindestens eine Kommunikationsschnittstelle (16) aufweist, wobei mindestens ein straßengeführtes Kraftfahrzeug (1) mit Stromabnehmern (2) das Segment (11, 12) befährt und mittels mindestens einer Sensorik einen Zustand des Oberleitungssystems (10) detektiert, wobei der Zustand mittels einer fahrzeugseitigen Kommunikationsschnittstelle (27) an die Steuereinheit (15) direkt oder indirekt über eine Zentrale (20) übermittelt wird, wobei die Steuereinheit (15) in Abhängigkeit des übermittelten Zustandes die Energieeinspeisung (13) ansteuert.

2. Verfahren nach Anspruch 1, **dadurch gekennzeichnet, dass** mittels der Sensorik eine Spannung an den Oberleitungen (3) erfasst wird.

3. Verfahren nach Anspruch 1 oder 2, **dadurch gekennzeichnet, dass** mittels der Sensorik Bilddaten des Oberleitungssystems (10) und/oder der Umgang des Oberleitungssystems (10) erfasst werden.

4. Verfahren nach einem der vorangegangenen Ansprüche, **dadurch gekennzeichnet, dass** der Steuereinheit (15) Daten übermittelt werden, aus denen die Steuereinheit (15) eine aktuelle und zukünftige Nutzung des Segments (11, 12) durch Kraftfahrzeuge (1) ermittelt und in Abhängigkeit der ermittelten aktuellen und zukünftigen Nutzung die Energieeinspeisung (13) ansteuert.

5. Verfahren nach Anspruch 4, **dadurch gekennzeichnet, dass** die Energieeinspeisung (13) abgeschaltet wird, wenn die Steuereinheit (15) ermittelt, dass aktuell kein Kraftfahrzeug (1) das Segment (11, 12) benutzt und für einen vorgegebenen Zeitraum eine zukünftige Nutzung nicht zu erwarten ist.

6. Steuereinheit (15) zum Steuern eines straßengeführten Oberleitungssystems (10) wobei die Steuereinheit (15) derart ausgebildet ist, mindestens eine Energieeinspeisung (13) eines Segments (11, 12) eines Oberleitungssystems (10) anzusteuern, wobei die Steuereinheit (15) mit mindestens einer Kommunikationsschnittstelle (16) ausgebildet ist, wobei die Steuereinheit (15) weiter derart ausgebildet ist, Daten über einen Zustand des Oberleitungssystems (10) zu empfangen und in Abhängigkeit des Zustandes die Steuerung der Energieeinspeisung (13) vorzunehmen.

7. Steuereinheit nach Anspruch 6, **dadurch gekennzeichnet, dass** der Zustand eine Spannungslage der Oberleitungen (3) des mindestens einen Segments (11, 12) ist.

8. Steuereinheit nach Anspruch 6 oder 7, **dadurch gekennzeichnet, dass** der Zustand eine Beschädigung und/oder Blockierung des mindestens einen Segments (11, 12) ist.

9. Steuereinheit nach einem der Ansprüche 6 bis 8, **dadurch gekennzeichnet, dass** die Steuereinheit (15) derart ausgebildet ist, aus übermittelten Daten eine aktuelle und zukünftige Nutzung des mindestens einen Segments (11, 12) durch Kraftfahrzeuge (1) zu ermitteln und in Abhängigkeit der ermittelten Nutzung die Energieeinspeisung (13) anzusteuern.

10. Steuereinheit nach Anspruch 9, **dadurch gekennzeichnet, dass** die Steuereinheit (15) derart ausgebildet ist, die Energieeinspeisung (13) abzuschalten, wenn ermittelt wird, dass aktuell kein Kraftfahrzeug (1) das Segment (11, 12) benutzt und für einen vorgegebenen Zeitraum eine zukünftige Nutzung nicht zu erwarten ist.
